(19) Europäisches Patentamt
European Patent Office
Office européen des brevets

(11) EP 0 728 805 A1

(12) **EUROPÄISCHE PATENTANMELDUNG**

(43) Veröffentlichungstag:
**28.08.1996 Patentblatt 1996/35**

(51) Int. Cl.[6]: **C08K 5/36**, C08L 21/00

(21) Anmeldenummer: **95115917.7**

(22) Anmeldetag: **10.10.1995**

(84) Benannte Vertragsstaaten:
**AT BE CH DE DK ES FR GB IT LI NL SE**

(30) Priorität: **18.02.1995 DE 19505650**

(71) Anmelder: **Firma Carl Freudenberg**
**D-69469 Weinheim (DE)**

(72) Erfinder:
- **Stein, Günter, Dr.**
  **D-69502 Hemsbach (DE)**
- **von Arndt, Ernst-Moritz, Dr.**
  **D-69469 Weinheim (DE)**

Bemerkungen:
- Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 3.).
- Die Anmeldung wird, wie ursprünglich eingereicht, unvollständig veröffentlicht (Art. 93 (2) EPÜ). Die Stelle der Beschreibung, die offensichtlich eine Auslassung enthält, ist als Lücke an der entsprechenden Stelle ersichtlich.

(54) **Verhinderung oder Verringerung der Entstehung von Aminen und N-Nitrosaminen bei Fertigung und Gebrauch von Elastomeren**

(57) Mono- oder multifunktionelle Isothiocyanate der allgemeinen Formel

$$R - (N{=}C{=}S)_x$$

mit R: Beliebiger organischer Rest, $x \geqq 1$,
oder Verbindungen, welche unter Temperatureinfluß solche Isothiocyanate bilden, werden in zu vulkanisierenden Elastomermischungen als Inhibitoren für Amine verwendet.

EP 0 728 805 A1

Printed by Rank Xerox (UK) Business Services
2.13.3/3.4

## Beschreibung

Aus Elastomerartikeln können flüchtige N-Nitrosamine an die Umgebung abgegeben werden. Diese wiederum können aus Kautschukchemikalien (z.B. Aktivatoren, Beschleunigern, Schwefelspendern und Verzögerern) gebildet werden, die Amine in gebundener Form enthalten. Bereits bei der Verarbeitung von Kautschukmischungen entstehen ebenfalls N-Nitrosamine. Bei der Bildung dieser Verbindungen sind sowohl $NO_x$ (zum Beispiel an Elastomerinhaltsstoffen adsorbiert oder aus der Umgebungsluft) als auch die entsprechenden sekundären Amine beteiligt.

Das Nitrosaminproblem ist in der Gummiindustrie seit vielen Jahren bekannt. Der Druck zur Eliminierung kanzerogener N-Nitrosamine wird durch gesetzliche Vorgaben betreffend die Maximalkonzentrationen verstärkt.

In Kautschuk + Gummi. Kunststoffe, Vol. 43 (1990), No. 2, pp. 107-113, wird der Einsatz von Inhibitoren zur Bindung der kritischen sekundären Amine untersucht. Insbesondere ergaben Versuche mit Oxim-blockierten Isocyanaten zur Inhibierung von Methylphenylamin aus Dimethyldiphenylthiuramdisulfid keine Verminderung der freiwerdenden NMPhA-Menge. Dieses Verfahren wird daher von den Autoren bei einer für Elastomere Üblichen Dosis an blockiertem Isocyanat als ineffektiv angesehen.

Aufgabe der Erfindung ist, chemische Verbindungen, im folgenden Amin-Inhibitoren genannt, anzugeben, deren Verwendung zur Blockierung toxische Nitrosamine bildender Amine nicht nur bei der Vulkanisation, sondern auch bei Lagerung, Montage und Einbau des Elastomerwerkstoffs führt. Insbesondere soll folgendes erreicht werden:

Verhinderung oder Einschränkung des Entstehens von N-Nitrosaminen bei Herstellung und Anwendung der Elastomeren.

Verhinderung oder Einschränkung des Ausgasens von in der Regel gebildeten freien Aminen bei Herstellung, Lagerung, Transport oder Montage der Elastomerteile sowie in deren Einbauzustand und damit Verhinderung der nachträglichen Bildung entsprechender N-Nitrosamine.

Beibehaltung oder zumindest nur geringe Beeinträchtigung der mechanischtechnologischen Eigenschaften, des Druckverformungsrests sowie der Beständigkeits- und Funktionseigenschaften der Vulkanisate.

Verhinderung oder zumindest deutliche Verringerung von Ausblühungen an der Oberfläche der Vulkanisate, hervorgerufen durch Reaktionsprodukte aus Vernetzungsreaktionen.

Hohe Hydrolyse-, Alkoholyse- bzw. Solvolvsebeständigkeit der Inhibitoren und damit Vermeidung negativer Einflüsse von Feuchtigkeit und entsprechenden Mischungsbestandteilen während der Mischungsherstellung und -lagerung.

Gelöst wird diese Aufgabe durch die im Patentanspruch dargelegte Maßnahme. Deren vorteilhafte Varianten sind in den Unteransprüchen dargestellt.

Die Erfindung beruht auf der Verwendung mono- oder multifunktioneller Isothiocyanate der allgemeinen Formel

$$R - (N{=}C{=}S)_x$$

mit R: Beliebiger organischer Rest; $x \geqq 1$,

in zu vulkanisierenden Elastomermischungen als Inhibitoren für die Amine. In einer Variante hiervon werden Verbindungen verwendet, welche erst unter erhöhter Temperatur, das heißt im allgemeinen unter Vulkanisationsbedingungen, chemische Stoffe mit den für die Inhibierung der Amine notwendigen funktionellen Isothiocyanatgruppen gemäß obiger Formel bilden, so z.B. Thioharnstoffe.

Die Blockierung der Isothiocyanatgruppen ist durch Umsetzung mit aktiven Wasserstoff enthaltenden Verbindungen möglich, schematisch gemäß

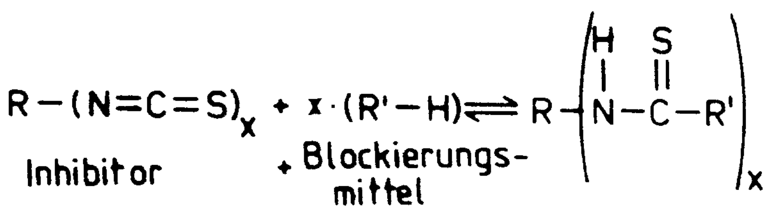


mit R, R': Beliebige organische Reste; $x \geqq 1$.

Selbstverständlich ist bei der Verwendung von Verbindungen, die unter Vulkanisationsbedingungen chemische Stoffe mit den für die Inhibierung der Amine notwendigen funktionellen Isothiocyanatgruppen freisetzen, zu beachten, daß die Reaktivität des Blockierungsmittels R' - H gegenüber dem Isothiocyanat geringer ist als die entsprechende Reaktivität der zu inhibierenden Amine. Entsprechende Informationen für die einzelnen Verbindungsklassen bezüglichen der Abstufung ihrer Reaktivität sind der Literatur entnehmbar.

Regel eine höhere Reaktivität als die sekundären Amine aufweisen, entstehen bevorzugt die unschädlichen Nitrosierungsprodukte dieser primären Amine. Statt derer kann auch Ammoniak entstehen, welcher in gleicher Weise mit

den sekundären Aminen in Konkurrenz tritt.

Bei den Isothiocyanate freisetzenden Verbindungen können jene in dimerer, oligomerer oder polymerer Form vorliegen.

Die Dosierung des gewählten Amininhibitors erfolgt entsprechend seiner Anzahl an aktiven bzw. aktivierbaren NCS-Gruppen und entsprechend der Menge der unter Vulkanisationsbedingungen freigesetzten Amine. Dabei wird man meist eine zu der theoretisch maximal möglichen Menge an freisetzbaren Aminen stöchiometrische Dosierung wählen.

Eine höhere Isothiocyanat-(Spender-)Dosierung wirkt sich aufgrund der Konzentrationserhöhung beschleunigend auf die Inhibierung der Amine aus. Unterstöchiometrische Dosierungen können im Gegensatz dazu zur nur teilweisen Inhibierung der Amine führen, was zum Beispiel aus wirtschaftlichen Gründen zweckmäßig sein kann.

Sind in der Gummimischung Bestandteile enthalten, die in Konkurrenz mit den zu inhibierenden Aminen ebenfalls mit Isothiocyanaten reagieren können, so ist das Isothiocyanat bzw. der Isothiocyanatspender entsprechend höher zu dosieren, um seine volle Wirksamkeit zu entfalten. Solche Bestandteile können z.B. Alkohole, Phenole oder Amine sein.

Auch Mercaptobenzthiazol kann wegen seiner funktionellen -SH - Gruppe mit Isothiocyanaten reagieren. Deshalb ist man mit der vorliegenden Erfindung in der Lage, auch diesen toxischen Elastomerbestandteil wirkungsvoll zu blokkieren.

Durch die erfindungsgemäße Verwendung der Inhibitoren wird die Bildung von Produkten aus den Vernetzungsreaktionen, die aufgrund ihrer geringen Löslichkeit in der Elastomermatrix zu Ausblühungen an der Vulkanisatoberfläche führen, auch nach mehrwöchiger Lagerung unterdrückt. Dadurch werden Hautirritationen oder allergische Reaktionen bei der Handhabung der Elastomerteile vermieden.

Gegenüber Isocyanaten zeichnen sich Isothiocyanate durch eine höhere Hydrolyse-, Alkoholyse- und Solvolysebeständigkeit aus. Dadurch wird ein negativer Einfluß von Feuchtigkeit und entsprechenden Mischungsbestandteilen während der Lagerung und Verarbeitung der Mischung auf die Inhibitorwirksamkeit weitgehend vermieden.

Ein detaillierter Einblick in die Wirksamkeit der Amin-Inhibitoren und deren Einfluß auf die mechanisch-technologischen und andere wichtige Eigenschaften der Elastomer-Vulkanisate entsprechend der Aufgabenstellung wird in den nachfolgenden Beispielen gegeben.

## Beispiele

Vorbemerkungen:

Da es genügt, bei allen Aussagen zur Wirksamkeit jeweils nur vergleichend zwischen Elastomermaterialien ohne und mit Amininhibitorzusatz zu unterscheiden, war es in erster Linie wichtig, auf möglichst gute Vergleichbarkeit der Meßwerte zu achten.

Im einzelnen wurden die in den späteren Beispielen genannten Mischungsserien den folgenden Prüfungen unterzogen:

| Prüfmethode | Meßprinzip |
|---|---|
| | |
| A 1 | Freie Amine im Pressendampf<br>Absaugen von Luft an der Vulkanisationspresse im Bereich des geöffneten Vulkanisationswerkzeugs. Saugleistung: 500 ml/min; Saugzeit: 2 h. Adsorption der Amine mittels präpariertem Silicagel in Adsorptionsröhrchen, Desorption mit Salzsäure, quantitative Bestimmung nach Derivatisierung mit Dansylchlorid (5-Dimethyl-aminonaphthalin-1-sulfochlorid, DNSCl) mit HPLC.<br>Angabe in mg Amin / $m^3$ Luft. |
| | |
| A 2 | Ausgasende Amine aus Vulkanisat<br>Zerkleinern einer frisch hergestellten Prüfplatte (200 mm x 200 mm x 2 mm) in quadratische Stücke der Kantenlänge 5 mm, Einfüllen in eine Gaswaschflasche, Durchleiten von 100 l Luft bei einer Saugleistung von 750 ml/min; Adsorption der Amine mittels präpariertem Silicagel in Adsorptionsröhrchen, Desorption mit Salzsäure, quantitative Bestimmung nach Derivatisierung mit Dansylchlorid (5-Dimethyl-aminonaphthalin-1-sulfochlorid, DNSCl) mit HPLC.<br>Angabe in mg Amin / $m^3$ Luft. |
| | |

| | |
|---|---|
| | |
| NA 1 | Nitrosamine im Pressendampf<br>Absaugen von Luft an der Vulkanisationspresse im Bereich des geöffneten Vulkanisationwerkzeuges. Saugleistung 1660 ml/min, Saugzeit 2 h; Adsorption der Nitrosamine in hierfür geeigneten, handelsüblichen Adsorptions-Röhrchen. Desorption durch Lösungsmittel. Gaschromatographische Trennung, TEA-Detektor (Thermal Energy Analyzer) mit massenspektrometischer Absicherung. Angabe in $\mu g$ N-Nitrosamin / Röhrchen. |
| | |

| | |
|---|---|
| NA 2 | Nitrosamine im Vulkanisat<br>Vorgehensweise in Anlehnung an D.C. Havery, T. Fazio; Food Chem. Toxicol. 20 (1982) 6, pp. 939-944: Lösemittelextraktion des Vulkanisats, Wasserdampfdestillation der Nitrosamine, Lösemittelextraktion des wäßrigen Destillats, Aufkonzentration des organischen Extrakts, gaschromatographische Trennung, TEA-Detektor mit massenspektrometischer Absicherung, Angabe in mg N-Nitrosamin / kg. |
| | |

**Herstellung der Mischungsvarianten**

Bei den aufgeführten Beispielen wurde zur optimalen Vergleichbarkeit der Ergebnisse folgende Vorgehensweise gewählt:

- Herstellung eines Mischungsgrundbatches im Innenmischer
- Aufmischen der Vernetzersubstanzen auf einem Laborwalzwerk
- Aufteilung des Batches entsprechend der Anzahl der zu untersuchenden Amininhibitorvarianten
- Einmischen des jeweiligen Inhibitors auf einem Laborwalzwerk

Dadurch wurden Schwankungen und Einflüsse aufgrund unterschiedlicher Bedingungen bei der Mischungsherstellung weitestgehend vermieden.

Lag der Schmelzpunkt der Inhibitorsubstanz höher als die auf dem Mischwalzwerk erreichte Temperatur von ca. 90°C, so mußte von dieser Vorgehensweise abgewichen werden. In diesen Fällen wurde der Inhibitor bereits im Innenmischer zugegeben. Bei blockierten Inhibitoren soll dabei die Temperatur im Innenmischer oberhalb des Schmelzpunktes, jedoch unterhalb der Aufspalttemperatur liegen.
Stellvertretend für die mit Schwefel vernetzbaren, doppelbindungshaltigen Kautschuke wurde Nitril-Butadien-Kautschuk (NBR) mit einem mittleren Acrylnitrilgehalt eingesetzt. In allen Beispielen wurde dabei die gleiche Grundrezeptur eingesetzt. Schwefel wurde zur besseren Verteilbarkeit bereits gegen Ende des Mischprozesses im Innenmischer zugegeben.

Grundrezeptur

Mengenangaben in phr = Gewichtsteile pro 100 Gewichtsteile Kautschuk:

| | |
|---|---|
| Acrylnitril-Butadien-Copolymer, 28% ACN-Gehalt | 100,-- |
| Zinkoxid (90%) | 5,5 |
| Stearinsäure | 1,-- |
| Zinksalz von 4- und 5-Methylmercaptobenzimidazol | 1,-- |
| Paraffinwachs | 1,-- |
| Ruß N 550 | 60,-- |
| Schwefel | 0,5 |
| Gesamt: | 169,-- |

Beispiel 1:

Den Einfluß einer Auswahl von anspruchsgemäßen Verbindungen auf die Vulkanisations- und Vulkanisateigenschaften bei einem Vernetzungssystem A, bestehend aus (Angaben in phr)

| | | | |
|---|---|---|---|
| TMTD | 1,5 | ⇨ DMA | ⇨ NDMA |
| DMPhTD | 1,5 | ⇨ MPhA | ⇨ NMPhA |
| MBS | 1,-- | ⇨ MOR | ⇨ NMOR |
| DTDM | 1,-- | ⇨ MOR | ⇨ NMOR, |

und den daraus resultierenden entsprechenden Aminen bzw. N-Nitrosaminen zeigen die folgenden Zusammenstellungen.

Art und Menge (phr) der eingesetzten Amininhibitoren:

| Variante / Amininhibitor | A 1 | A 2 | A 3 | A 4 | A 5 | A 6 | A 7 | A8 |
|---|---|---|---|---|---|---|---|---|
| Cyclohexylisothiocyanat (CITC) | - | 4,7 | 3,1 | - | - | - | - | |
| Phenylisothiocyanat (PITC) | - | - | - | 4,4 | - | - | - | |
| Allylisothiocyanat (AITC) | - | - | - | - | 3,3 | - | - | |
| N,N'-Diphenylthioharnstoff (DPTU) | - | - | - | - | - | 7,6 | - | |
| Phenylthioharnstoff (PTU) | - | - | - | - | - | - | 5,1 | |
| Tricyclohexylthioharnstoff (TCTU) | - | - | - | - | - | - | - | 10,7 |

CITC, PITC und AITC: Hierbei handelt es sich um freie Isothiocyanate.

DPTU und PTU: Dies sind mit Anilin (DPTU) bzw. Ammoniak (PTU) blockierte Isothiocyanate, welche eine Verkürzung der Anvulkanisationszeit $t_{s2}$ bei einer Testmischung SRE-NBR 28 auf deutlich unter 50% der entsprechenden Zeit für die inhibitor-freie Mischung bewirken.

TCTU: Es handelt sich um ein mit Dicyclohexylamin blockiertes Isothiocyanat, welches die Anvulkanisationszeit $t_{s2}$ bei SRE-NBR 28 um deutlich weniger als 50% gegenüber der entsprechenden Zeit bei der inhibitor-freien Mischung verkürzt.

An den Vulkanisaten erhaltene Meßergebnisse:

**Mechanisch-technologische Eigenschaften**

| Variante | A 1 | A 2 | A 3 | A 4 | A 5 | A6 | A7 | A8 |
|---|---|---|---|---|---|---|---|---|
| Härte Shore A | 77 | 75 | 76 | 75 | 75 | 76 | 74 | 73 |
| Spannwert bei 100% Dehnung MPa | 7,6 | 7,9 | 7,8 | 6,6 | 7,7 | 6,8 | 7,2 | 6,4 |
| Zugfestigkeit MPa | 21,4 | 22,1 | 21,5 | 21,4 | 22,9 | 20,5 | 20,9 | 21,1 |
| Bruchdehnung % | 248 | 250 | 254 | 263 | 271 | 241 | 274 | 293 |

**Druckverformungsrest**

| Variante | A 1 | A 2 | A 3 | A 4 | A5 | A 6 | A7 | A8 |
|---|---|---|---|---|---|---|---|---|
| 24 h/100°C 25 % Def. % | 10 | 10 | 9 | 9 | 11 | 8 | 12 | 15 |

**Lagerung in Heißluft, 3 Tage / 100°C**

| Variante | A 1 | A 2 | A 3 | A 4 | A 5 | A6 | A7 | A8 |
|---|---|---|---|---|---|---|---|---|
| Härte Shore A (Δ Härte Shore A) | 80 (+ 3) | 78 (+ 3) | 79 (+ 3) | 78 (+ 3) | 79 (+ 4) | 78 (+2) | 77 (+3) | 77 (+4) |
| Zugfestigkeit MPa (Δ Zugfestigkeit %) | 23,3 (+ 9) | 23,4 (+ 6) | 23,4 (+ 9) | 22,9 (+ 7) | 23,4 (+ 2) | 23,6 (+15) | 21,5 (+3) | 22,2 (+5) |
| Bruchdehnung % (Δ Bruchdehnung %) | 211 (-15) | 200 (- 20) | 211 (- 17) | 213 (- 19) | 225 (- 17) | 207 (-14) | 219 (-20) | 237 (-19) |

**Lagerung in Heißluft, 14 Tage / 100°C**

| Variante | A 1 | A 2 | A 3 | A 4 | A 5 | A6 | A7 | A8 |
|---|---|---|---|---|---|---|---|---|
| Härte Shore A (Δ Härte Shore A) | 83 (+ 6) | 82 (+ 7) | 82 (+ 6) | 82 (+ 7) | 83 (+ 8) | 82 (+6) | 82 (+8) | 82 (+9) |
| Zugfestigkeit MP (Δ Zugfestigkeit a %) | 22,0 (+ 3) | 22,5 (+ 2) | 20,9 (- 3) | 22,5 (+ 5) | 24,0 (+ 5) | 21,5 (+5) | 21,1 (+1) | 21,1 (±0) |
| Bruchdehnung % (Δ Bruchdehnung %) | 156 (- 37) | 140 (- 44) | 147 (- 42) | 155 (- 41) | 163 (- 40) | 149 (-38) | 151 (-45) | 161 (-45) |

**Ausgasende Amine aus Vulkanisat (Prüfmethode A 2)**

Mengenangaben in mg Amin / $m^3$.
Die in Klammern angegebenen Werte geben den relativen Anteil in % im Vergleich zur Variante A1 (ohne Amininhibitor) an.
Vulkanisationsbedingungen: 185°C/4 min.

| Amin \ Variante | A 1 | A 2 | A 3 | A 4 | A 5 | A6 | A7 | A8 |
|---|---|---|---|---|---|---|---|---|
| DMA | 1,3 | < 0,1 | < 0,1 | < 0,1 | < 0,1 | < 0,1 | < 0,1 | < 0,1 |
| MOR | 1,0 | < 0,1 | < 0,1 | < 0,1 | < 0,1 | < 0,1 | < 0,1 | < 0,1 |
| MPhA | 15,1 | 3,8 (25) | 7,9 (52) | 2,7 (18) | 4,9 (32) | 12,3 (81) | 13,7 (91) | 10,8 (72) |

**Nitrosamine im Pressendampf (Prüfmethode NA 1)**

Mengenangaben in µg Nitrosamin / Röhrchen.
Vulkanisationsbedingungen: 185°C / 4 min

| Nitrosamine / Variante | A 1 | A 3 | A 4 |
|---|---|---|---|
| NDMA | < 0,01 | < 0,01 | < 0,01 |
| NMOR | < 0,01 | < 0,01 | < 0,01 |
| NMPhA | 25 | 21 | 15 |

Man erkennt folgendes:

- Die mechanisch-technologischen Eigenschaften, der Druckverformungsrest und die Alterung in Heißluft werden durch die eingesetzten Amininhibitoren nicht oder nur geringfügig beeinflußt.
- Die aus den Vulkanisaten an die Umgebungsluft freigesetzten Mengen an Aminen als Reaktionsprodukte der eingesetzten Vernetzer werden gegenüber der Variante ohne Amininhibitor im Falle des Methylphenylamins deutlich herabgesetzt, bei Dimethylamin und Morpholin sogar unter die Nachweisgrenze der verwendeten analytischen Bestimmungsmethode.
- Die Bestimmung der Mengen an bei der Vulkanisation emittierten N-Nitrosaminen erlaubt keine eindeutige Differenzierung, da bereits bei der Variante ohne Amininhibitorzusatz (A1), ebenso wie bei den untersuchten Varianten mit Amininhibitorzusatz, die NDMA- und die NMOR-Menge unterhalb der Nachweisgrenze lagen. Bei der NMPhA-Menge wurde ein geringfügiger Rückgang gefunden, allerdings lagen hier die Werte auf einem sehr hohen Niveau.

Da die Freisetzung von Methylphenylamin bzw. NMPhA mit den eingesetzten Inhibitormengen nur zum Teil unterdrückt werden konnte, stand wegen der bezüglich der freisetzbaren Amingesamtmenge stöchiometrischen Dosierung der Inhibitoren für die beiden Amine Dimethylamin und Morpholin ein Überschuß an Amininhibitor zur Verfügung. Offenbar ist zur völligen Reduzierung der freigesetzten Menge an Methylphenylamin bzw. dem entsprechenden N-Nitrosamin zur Erhöhung der Inhibierungsgeschwindigkeit ein deutlicher Überschuß an Amininhibitor(en) notwendig, ggf. bei noch höherer Vulkansationstemperatur. In dem folgenden Beispiel 2 wurde aus den oben genannten Gründen auf den Einsatz des Beschleunigers DMPhTD vollständig verzichtet.

**Beispiel 2**

Es wurde an einem Vulkanisationssystem B, bestehend aus (Angaben in phr)

| | | | |
|---|---|---|---|
| TMTD | 2,5 | ⇨ DMA | ⇨ NDMA |
| MBS | 1,5 | ⇨ DMA | ⇨ NDMA |
| DTDM | 1,5 | ⇨ MOR | ⇨ NMOR |
| TBTD | 1,5 | ⇨ DBA | ⇨ NDBA |

und den daraus resultierenden entsprechenden Aminen bzw. N-Nitrosaminen der Einfluß des Inhibitors CITC wird aufgezeigt. Dabei können die ausgewählten Amine als repräsentative Beispiele für in der Gummiindustrie vorkommende, kritische sekundäre Amine angesehen werden.

Art und Menge (phr) des eingesetzten Amininhibitors:

| Amininhibitor \ Variante | B 1 | B 2 | B 3 |
|---|---|---|---|
| CITC | - | 1,8 | 6,6 |

Dabei ist die Dosierung des Inhibitors in Variante B3 stöchiometrisch zur theoretisch maximalen Menge an entstehenden Aminen gewählt. Die mechanischtechnologischen Eigenschaften, der Druckverformungsrest und das Alterungsverhalten der drei Varianten zeigen ebenso wie die entsprechenden Varianten aus Beispiel 1 nur geringfügige Abweichungen voneinander, so daß auf eine Auflistung verzichtet wird.

**Freie Amine im Pressendampf (Prüfmethode A 1)**

Mengenangaben in mg Amin/$m^3$.
Die in Klammern angegebenen Werte geben den relativen Anteil in Prozent im Vergleich zur Variante B 1 (ohne Aminhibitor) an.
Vulkanisationsbedingungen: 185°C / 4 min.

| Amin \ Variante | B 1 | B 2 | B 3 |
|---|---|---|---|
| DMA | 2,7 | 2,5 (93) | 2,3 (85) |
| MOR | 5,3 | 4,3 (81) | 2,6 (49) |
| DBA | 0,8 | 0,7 (88) | 0,5 (63) |

**Ausgasende Amine aus Vulkanisat (Prüfmethode A 2)**

Mengenangaben in mg Amin/$m^3$.
Die in Klammern angegebenen Werte geben den relativen Anteil in Prozent im Vergleich zur Variante B 1 (ohne Aminhibitor) an.
Vulkanisationsbedingungen: 185°C / 4 min.

| Amin \ Variante | B 1 | B 2 | B 3 |
|---|---|---|---|
| DMA | 10,4 | 2,6 (25) | < 0,1 |
| MOR | 8,7 | 2,7 (31) | < 0,1 |
| DBA | 1,2 | 0,3 (25) | < 0,1 |

Die in den Tabellen aufgelisteten Ergebnisse zeigen folgendes:

- Die Emission der aus den Vulkanisationsbeschleunigern gebildeten Amine DMA, MOR und DBA kann mit steigender Dosierung des Amininhibitors deutlich verringert werden.
- Bei der Variante B3 wird die Menge an aus dem Vulkanisat ausgasenden Aminen jeweils unter die Nachweisgrenze der verwendeten Analysenmethode verringert. Somit ergibt sich auch bei Lagerung, Versand und im Einbauzustand des Elastomerteils eine nahezu vollständige Unterdrückung der Aminemission und damit auch der Bildung entsprechender N-Nitrosamine.

**Patentansprüche**

**1.** Verwendung mono- oder multifunktioneller Isothiocyanate der allgemeinen Formel

$$R - (N=C=S)_x$$

mit R: Beliebiger organischer Rest; $x \geqq 1$,
oder von Verbindungen, welche unter Temperatureinfluß solche Isothiocyanate bilden, als Inhibitoren für Amine in zu vulkanisierenden Elastomermischungen.

**2.** Verwendung von Verbindungen gemäß Anspruch 1 in Form von durch primäre Amine chemisch blockierten Isothiocyanaten.

**3.** Verwendung von Verbindungen gemäß Anspruch 1 in Form dimerer, oligomerer oder polymerer Isothiocyanate.

**4.** Verwendung von Verbindungen gemäß Anspruch 1 bis 3, dadurch gekennzeichnet, daß man die aktiven bzw. aktivierbaren Isothiocyanatgruppen entsprechend den unter Vulkanisationsbedingungen freigesetzten Aminen stöchiometrisch dosiert.

**5.** Verwendung von Verbindungen gemäß Anspruch 1 bis 3, dadurch gekennzeichnet, daß man die aktiven bzw. aktivierbaren Isothiocyanatgruppen entsprechend den unter Vulkanisationsbedingungen freigesetzten Aminen unterstöchiometrisch dosiert.

**6.** Verwendung von Verbindungen gemäß Anspruch 1 bis 3, dadurch gekennzeichnet, daß man die aktiven bzw. aktivierbaren Isocthioyanatgruppen entsprechend den unter Vulkanisationsbedingungen freigesetzten Aminen überstöchiometrisch dosiert.

Europäisches Patentamt

# EUROPÄISCHER RECHERCHENBERICHT

Nummer der Anmeldung
EP 95 11 5917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Section Ch, Week 9441<br>Derwent Publications Ltd., London, GB;<br>Class A12, AN 94-330215<br>XP002002412<br>& JP-A-06 256 572 (OUCHI SHINKO KAGAKU KOGYO KK) , 13.September 1994<br>* Zusammenfassung, besonders Zeilen 9 und 25 *<br>----- | 1,2 | C08K5/36<br>C08L21/00 |

| RECHERCHIERTE SACHGEBIETE (Int.Cl.6) |
|---|
| C08K |

Der vorliegende Recherchenbericht wurde für alle Patentansprüche erstellt

| Recherchenort | Abschlußdatum der Recherche | Prüfer |
|---|---|---|
| DEN HAAG | 7.Mai 1996 | Van Humbeeck, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)